# EUROPEAN PATENT APPLICATION

(11) **EP 0 895 428 A1**
(43) Date of publication of application: **03.02.1999**
(21) Application number: 98305971.8
(22) Date of filing: 27.07.1998
(51) Int. Cl.: H04N 9/31, G02B 27/28

(54) **Projection display**

(30) Priority: 29.07.1997 JP 203478/97
(71) Applicant: SONY CORPORATION, Tokyo (JP)
(72) Inventor: Hatanaka, Masato, Shinagawa-ku, Tokyo (JP); Tagawa, Yusaku, Shinagawa-ku, Tokyo (JP); Katsuragawa, Hideki, Shinagawa-ku, Tokyo (JP)
(74) Representative: Ayers, Martyn Lewis Stanley

(57) **Abstract**

Disclosed is a projection display for projecting an image displayed on an image display element on a screen using light rays generated by a light source, wherein sheet-type polarized light separating mirrors each having a plane tilted at an angle of 10 to 30üK with respect to an optical axis of the light source are disposed between the image display element and the light source, whereby the projection display can be miniaturized with the reduced cost.

## Description

The present invention relates to an improved projection display for projecting an image displayed on an image display element on a screen using light rays generated by a light source.

A so-called projection display for projecting an image displayed on an image display element on a screen using light rays generated by a light source is disclosed, for example, in Japanese Patent Laid-open Nos. Hei 2-253247 and Hei 5-19209. The projection display disclosed in the former document employs a prism type polarizer, and the projection display disclosed in the latter document employs a polarizer composed of a plurality of glass sheets each having a Brewster angle. The prism type polarizer and the polarizer making use of the Brewster angle are adapted to remove a light component to be absorbed in the projection display and hence to reduce a heat load which is imparted to an optical system from light rays generated by a light source; and to increase an optical efficiency of a necessary polarized wave by polarization-conversion of an unnecessary polarized wave.

The projection display using the prism type polarizer disclosed in the former document, however, has a problem that the prism type polarizer has a large-size and is expensive. Meanwhile, the projection display using the glass sheets disclosed in the latter document, however, has a problem that the separation characteristic is physically limited depending on the Brewster angle and is not necessarily desirable, and therefore, a desirable characteristic must be attained by use of a plurality of glass sheets.

According to the present invention, there is provided a projection display for projecting an image displayed on an image display element on a screen using light rays generated by a light source, including: a sheet-type polarized light separating mirror with its plane tilted at an angle of 10 to 30° with respect to an optical axis of the light source, the mirror being disposed between the image display element and the light source for separating a first polarized light component and a second polarized light component from each other, and converting either the first polarized light component or the second polarized light component, thereby unifying both the polarized light components into either the first polarized light component or the second polarized light component.

Embodiments of the present invention can provide projection displays which are miniaturized and/or cheaper to produce.

In the hereinafter described embodiment of the present invention, in the projection display for projecting an image displayed on the image display element on a screen using light rays generated by a light source, the sheet-type polarized light separating mirror with its plane tilted at an angle of 10 to 30° with respect to the optical axis of the light source is disposed between the image display element and the light source. Accordingly, the sheet-type polarized light separating mirror is capable of removing a light component to be absorbed in the projection display, thereby reducing a heat load which is applied to the optical system from the light rays generated by the light source. The sheet-type polarized light separating mirror can be prepared at a cost lower than that of the prism type polarizer, and can be miniaturized because the plane thereof is tilted at a relatively small angle of 10 to 30° with respect to the optical axis of the light source.

If the tilting angle of the plane is less than 10° or more than 30°, it is difficult to sufficiently separate the first and second polarized light components from each other.

Hereinafter, preferred embodiments of the present invention will be described by way of non-limitative example with reference to the accompanying drawings, in which:
Fig. 1 is a perspective view of a television set as a preferred embodiment to which a projection display of the present invention is applied;
Fig. 2 is a sectional view of the television set, taken on line A-A of Fig. 1;
Fig. 3 is a perspective view showing a preferred embodiment of the projection display of the present invention shown in Fig. 2;
Fig. 4 is a plan view showing the projection display seen from the direction shown by an arrow A1 of Fig. 3;
Fig. 5 is a view showing the internal structure of the projection display shown in Fig. 4;
Fig. 6 is a schematic view showing only an optical system of the projection display shown in Fig. 5;
Fig. 7 is a perspective view showing one example of a PS conversion unit shown in Figs. 5 and 6;
Fig. 8 is a view showing a positional relationship between the optical system of the PS conversion unit shown in Fig. 7 and the light source;
Fig. 9 is a view showing a positional relationship between the polarized light separating mirror and the light source;
Fig. 10 is a diagram showing one example of the separation characteristic of the polarized light separating mirror;
Fig. 11 is a view showing one example of a first fly eye lens;
Fig. 12 is a view showing one example of a second fly eye lens;
Fig. 13 is a view showing another example of the second fly eye lens;
Fig. 14 is a view showing another embodiment of the projection display of the present invention;
Fig. 15 is a view showing a further embodiment of the projection display of the present invention;
Fig. 16 is a view showing a further embodiment of the projection display of the present invention; and
Fig. 17 is a view showing a further embodiment of the projection display of the present invention.

It is to be noted that although the following embodiments will be described using specific terms, such description is illustrative purposes only, and it is to be understood that the scope of the present invention is not limited to the embodiments unless otherwise specified in terms of the limitation of the present invention.

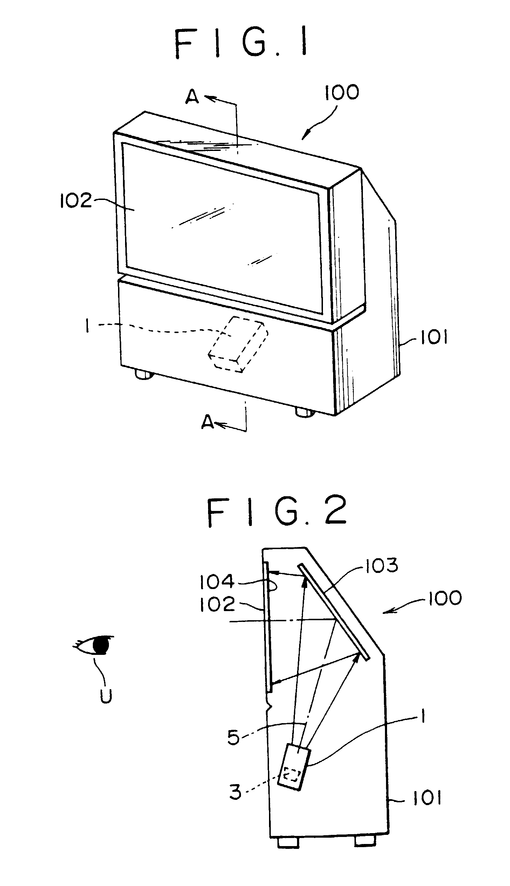

Fig. 1 is a view showing the external appearance of a preferred embodiment in which a projection display 1 of the present invention is applied, and Fig. 2 is a sectional view, taken on line A-A of Fig. 1, showing the internal structure of a backface projection television set 100 of a liquid crystal type including the projection display 1 shown in Fig. 1.

A schematic structure of the television set 100 will be first described. Referring to Figs. 1 and 2, the television set 100 houses a cabinet 101, a screen 102, a mirror 103 and the projection display 1. Light rays 5 to be projected, which are formed from light rays of a light source 3, go out of the projection display 1, being reflected from the mirror 103, and are projected to a backface 104 of the screen 102. It is to be noted that in the following description the term "projection" is equivalent to a term "incidence".

An image projected on the screen 102 can be viewed by a user U as a black-and-white image or a color image.

In the description of the following embodiments it is assumed that a color image is displayed on the screen 102.

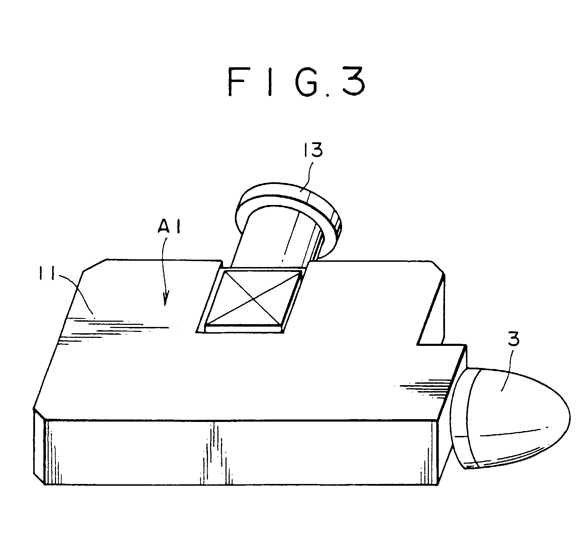

A preferred embodiment of the projection display 1 shown in Figs. 1 and 2 will be described below with reference to Figs. 3 to 5.

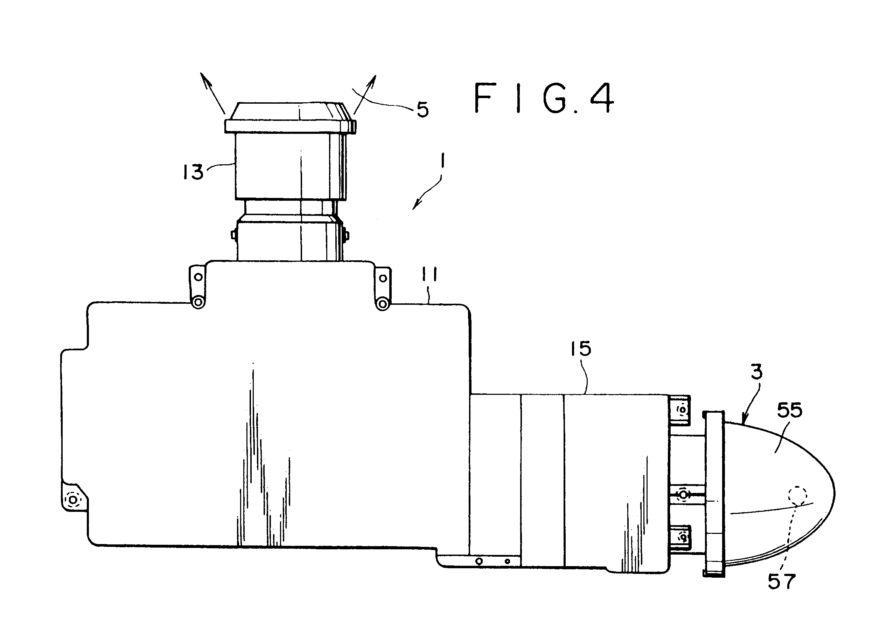

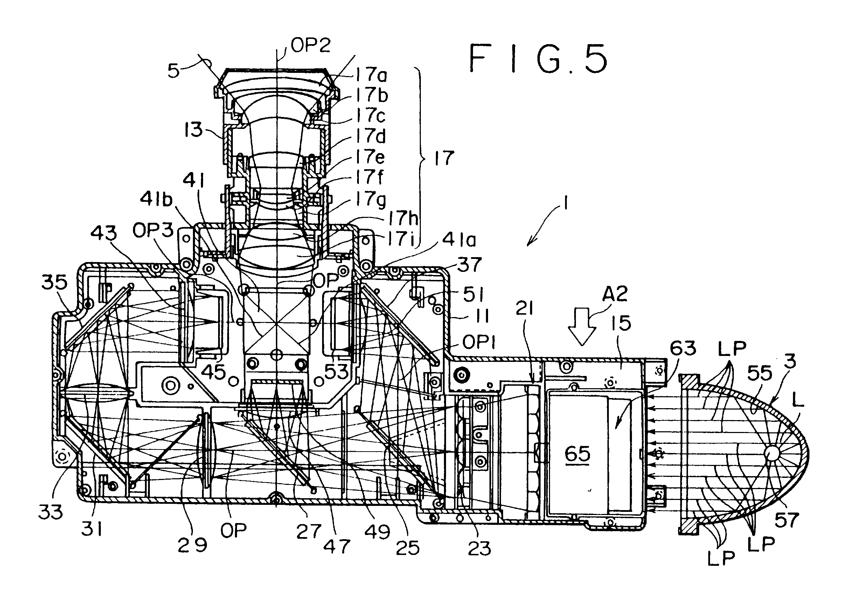

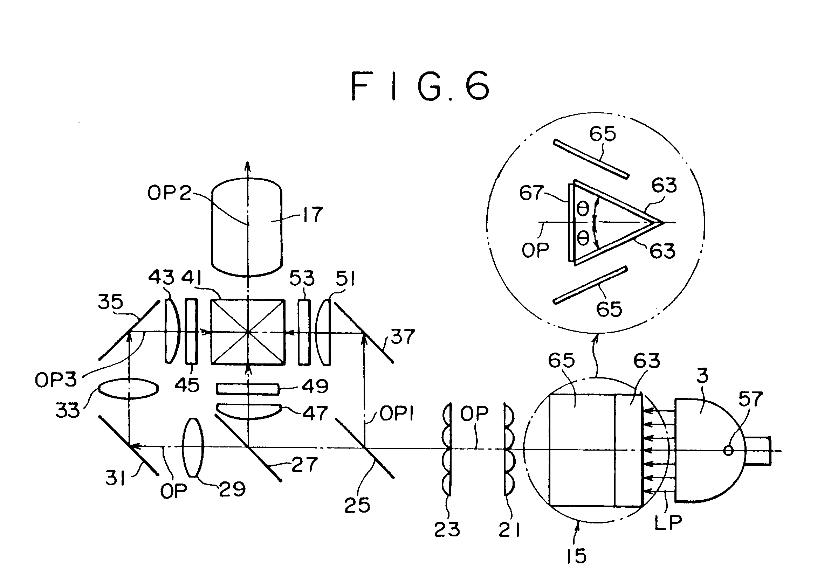

Fig. 3 is a schematic view showing the external appearance of the projection display 1; Fig. 4 is a side view, seen from the direction indicated by an arrow A1, showing the projection display 1 of Fig. 3; and Fig. 5 shows one example of the internal structure of the projection display 1. In addition, Fig. 6 diagrammatically shows an optical system of Fig. 5.

As shown in Figs. 3 and 4, the projection display 1 includes a main body 11, a projection lens barrel 13, a PS conversion unit 15 and the light source 3.

The main body 11 is integrated with the projection lens barrel 13 which includes, as shown in Fig. 5, a projection lens group 17 having various kinds of lenses 17a to 17i. The projection lens barrel 13 has a mechanism capable of focusing the projection light rays (image light rays) 5 on the backface 104 of the screen 102 shown in Figs. 1 and 2.

The main body 11 removably holds the PS conversion unit 15, and has the following components. A first fly eye lens 21 and a second fly eye lens 23 are disposed near the PS conversion unit 15 in such a manner as to be spaced from and in parallel to each other. Along an optical axis OP from the second fly eye lens 23 to the projection lens group 17 are arranged the following optical elements. That is, dichroic mirrors 25 and 27, a relay lens 29, a mirror 31, a relay lens 33, and a mirror 35 are arranged in this order from the second fly eye lens 23.

Another mirror 37 is arranged, near the dichroic mirror 25, along an optical axis OP1 perpendicular to the optical axis OP. In a region surrounded by the dichroic mirror 27 and mirrors 35 and 37 is arranged a dichroic cube 41. A liquid crystal display (LCD: image display element) 45 for blue (B) is arranged between the dichromic cube 41 and a condenser lens 43; a liquid crystal display (LCD: image display element) 49 for green (G) is arranged between the dichroic cube 41 and a condenser lens 47; and a liquid crystal display (LCD: image display element) 53 for red (R) is arranged between the dichroic cube 41 and a condenser lens 51. The dichroic mirror allows light in a specific wavelength region to pass therethrough and allows light in the remaining wavelength region to be reflected therefrom.

As shown in Figs. 4 to 6, the light source 3 is mounted on the main body 11, and as shown in Fig. 5, the light source 3 has a reflector 55 and a lamp 57 represented by a metal halide lamp. Light rays L generated by the lamp 57 are reflected from the reflector 55 having a parabolic plane to be formed into substantially parallel light rays LP which are fed to the PS conversion unit 15 side.

The PS conversion unit 15 will be described with reference to Figs. 6 to 9.

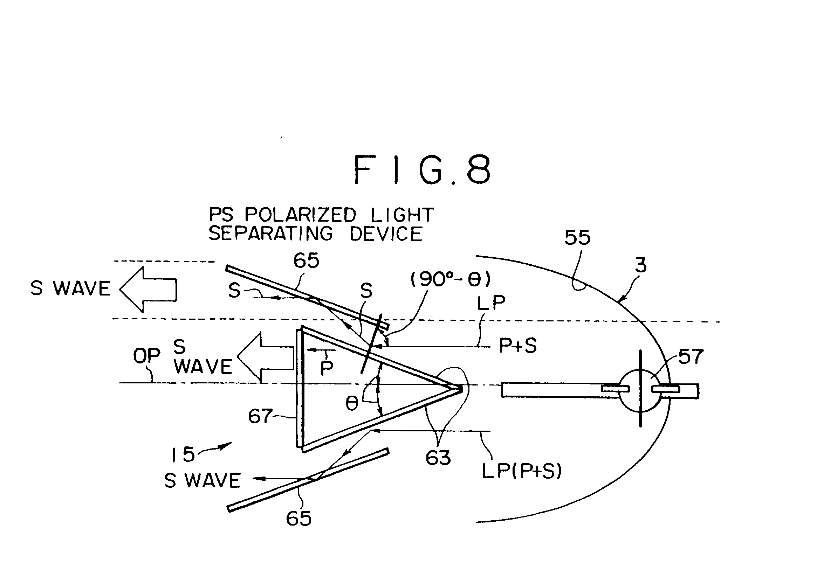

The PS conversion unit 15 functions as a PS polarizing device for receiving the parallel light rays LP formed by the reflector 55 of the light source 3 and deriving therefrom, for example, only a S wave (S polarized light component: first polarized light component) as shown in Fig. 8. The parallel light rays LP contain a P wave (P polarized light component: second polarized light component) and the S wave (first polarized light component). When the P and S waves pass through the PS conversion unit 15, only one wave, for example, the S wave is derived by the PS conversion unit 15. The S wave is then fed to the first fly eye lens 21 side shown in Fig. 5.

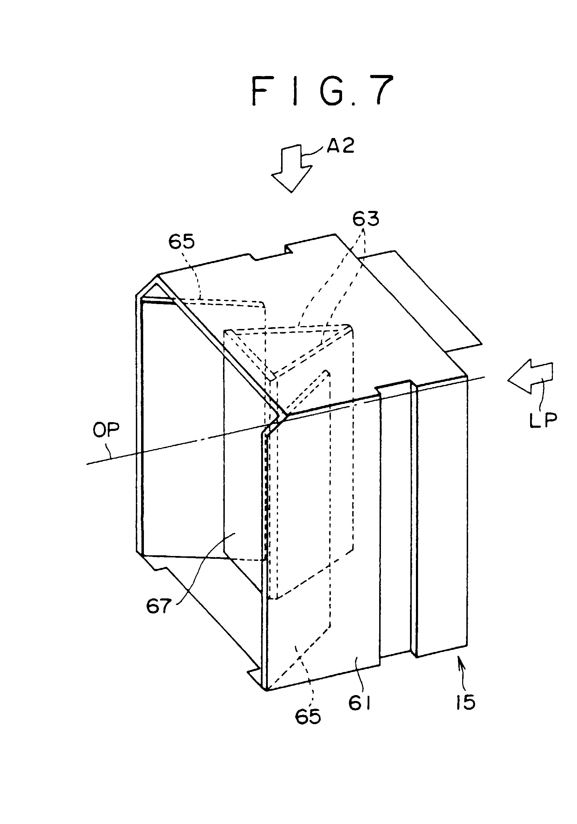

The PS conversion unit 15 has, as shown in Figs. 7 and 8, a case 61, two sheet-type polarized light separating mirrors 63 (first sheet-type polarized light separating mirror and second sheet-type polarized light separating mirror), two quarter-wave plate mirrors 65, and one half-wave plate 67.

The two polarized light separating mirrors 63 are arranged such that the plane of each mirror is tilted at a specific angle θ with respect to the optical axis OP2 of Fig. 5, as seen from the direction indicated by an arrow A2, that is, seen in the direction parallel to the optical axis OP2 of the projection lens barrel 13 shown in Figs. 5 and 6. That is to say, the two polarized light separating mirrors 63 are arranged symmetrically with respect to the optical axis OP with each of the planes thereof tilted at an angle θ with respect to the optical axis OP. The angle θ is preferably set in a range of 10 to 30°, more preferably, at an approximately 20°.

If the angle θ of the polarized light separating mirror 63 becomes smaller from 10°, the transmittance for the S wave of the polarized light separating mirror 63 shown in Fig. 8 becomes smaller and the necessary transmitted amount of the P wave becomes smaller. This is undesirable because it is difficult to sufficiently separate the P and S waves from each other.

If the angle θ becomes larger from 30°, the transmittance for the S wave becomes larger, and the transmitted amount of the P wave becomes smaller. This is undesirable because it is difficult to sufficiently separate the P and S waves from each other.

The half-wave plate 67 is mounted to the leading ends, which are opened, of the polarized light separating mirrors 63 in such a manner as to be perpendicular to the optical axis OP.

The PS conversion unit 15 shown in Fig. 8 derives a desired wave, for example, S wave from the parallel light rays LP (containing the P and S waves), that is, polarization-converts only one of the separated light components. In the example shown in Fig. 8, when the substantially parallel light rays LP enter the two polarized light separating mirrors 63 (incident angle: 90°-θ, for example 70°), the P wave passes through the polarized light separating mirrors 63, but the S wave is reflected from the polarized light separating mirrors 63 and reaches the quarter-wave plate mirrors 65. The S wave is reflected from the quarter-wave plate mirrors 65 and fed in parallel to the optical axis OP. On the other hand, the P wave, which has passed through the polarized light separating mirrors 63, is polarization-converted into the S wave by the half-wave plate 67 and is fed as the S wave in parallel to the optical axis OP.

In this way, only the S wave is polarization-separated from the parallel light rays LP and is fed to the subsequent first fly eye lens 21 side. In this example, since only the S wave is used by removal of the unnecessary polarized light component (P wave), a heat load applied to the incident side polarized sheet from the light rays generated by the light source 3 can be reduced, and the illumination efficiency of the S wave can be also increased. That is to say, even if the light quality of the lamp of the light source 3 is doubled, it is possible to suppress at low values temperatures of the polarized light separating mirrors 63, quarter-wave plate mirrors 65, half-wave plate 67, and the subsequent elements disposed from the fly eye lens to the projection lens system.

Each polarized light separating mirror 63 is preferably coated with a single TiO₂ film. With this configuration, the polarized light separating mirror 63 can be prepared at a cost lower than that of a prism type polarized light separating element, and also the incident angle (90°-θ) can be set at a large value, for example, about 70°.

The first and second fly eye lenses 21 and 22 as an optical integrator shown in Fig. 5 will be described.

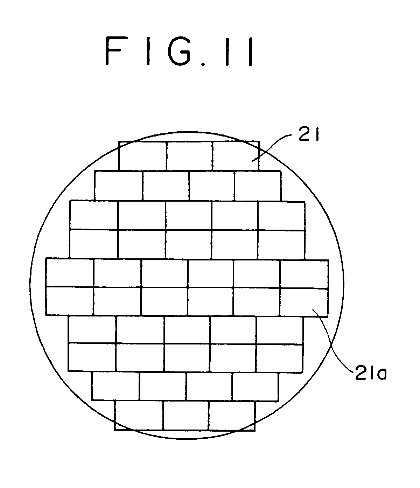

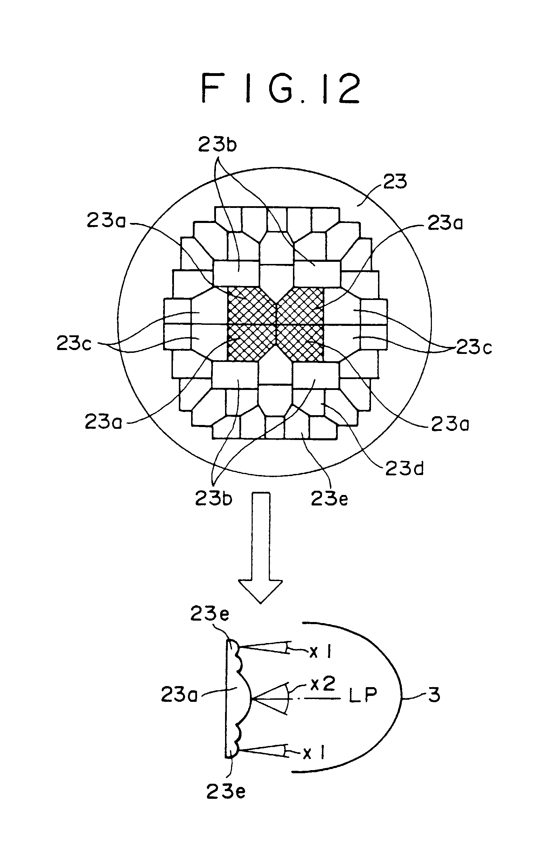

Fig. 11 shows the first fly eye lens 21 and Fig. 12 shows the second fly eye lens 23. The first fly eye lens 21 is formed by collecting on a plane a number of rectangular lenses 21a. The second fly eye lens 23 is formed by collecting on a plane four large-sized central lenses 23a and various peripheral lenses 23b, 23c, 24d and 23e each being different in size from the lens 23a. The first and second fly eye lenses 21 and 23 are disposed behind the PS conversion unit 15 shown in Fig. 5 for equalizing the intensity distribution of, for example, S wave formed by the PS conversion unit 15. The equalized light rays are then fed to the dichroic mirror 5 and the later shown in Fig. 5.

In the second fly eye lens 23, each of the four lenses 23a located at the central portion is set to be larger than each of the peripheral lenses for the purpose of most efficiently receiving the lamp arc image from the light source 3. Preferably, the central portion is divided into four parts on which the four large-sized lenses 23a are located. In the case where the incident angle of the parallel light rays LP from the light source 3 is large (for example, x2 shown in Fig. 12), that is, the size of the image-formation of the parallel light rays LP is large at the central portion of the second eye lens 23, the large-sized lenses 23 are allowed to receive such light rays LP. On the contrary, since the incident angle of the parallel light rays LP is relatively small at the periphery portion of the second fly eye lens 23, the small-sized lenses 23c, 23d and 23e for example are located at the peripheral portion.

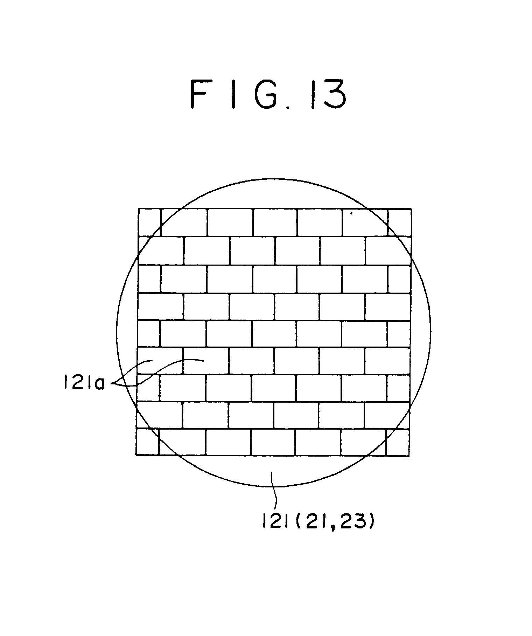

Fig. 13 shows another example of each of the first and second fly eye lenses 21 and 23 shown in Figs. 11 and 12. As shown in this example, each of the fly eye lenses 21 and 23 may be replaced with a fly eye lens 121 having lenses 121a which are equal in size to each other.

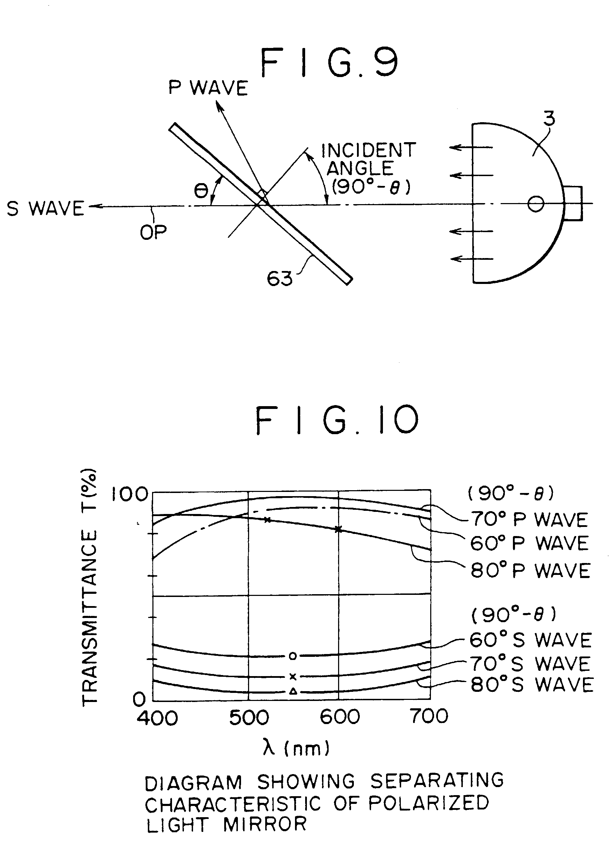

Fig. 10 shows changes in transmittance (for the P wave or S wave) of each sheet-type polarized light separating mirror 63 of the PS conversion unit 15 with the wavelength of the parallel light rays LP obtained by the lamp of the light source 3 taken as a parameter. In this case, as shown in Fig. 9, the incident angle of the P and S waves is set at (90°-θ). From the separation characteristic of the polarized separating mirror 63 shown in Fig. 10, it becomes apparent that the tilting angle θ of the plane of the polarized light separating mirror 63 with respect to the optical axis OP is desired to be set, as described above, in a range of 10 to 30°. It is to be noted that the polarized light separating mirror exhibiting the above separation characteristic is preferably coated with the TiO₂ film.

Next, an example of operating the projection display 1 housed in the above-described television set will be described.

Referring first to Fig. 5, the lamp 57 of the light source 3 generates light rays which are formed into substantially parallel light rays LP. The parallel light rays LP enter the polarized light separating mirrors 63 of the PS conversion unit 15 shown in Fig. 8. At this time, the P wave contained in the parallel light rays LP passes through the polarized light separating mirrors 63 but the S wave is reflected from the polarized light separating mirrors 63, reaching the quarter-wave plate mirrors 65, and is reflected therefrom to be introduced as the S wave in parallel to the optical axis OP.

On the contrary, the P wave, which has passed through the polarized light separating mirrors 63, passes through the half-wave plate 67 to be converted into the S wave.

Accordingly, the PS conversion unit 15 functioning as the PS convertor derives only the S wave from the parallel light rays LP (containing the P and S waves) and removes the P wave as the unnecessary polarized light component. As a result, even if the light quality of the light source 3 is larger, the heat quality thereof can be reduced, so that it is possible to suppress at relatively low values temperatures of the polarized light separating mirrors 63 and the optical elements subsequent thereto, and to increase the illumination efficiency of the S wave.

Since each of the polarized light separating mirrors 63 is tilted at a relatively small angle θ with respect to the optical axis OP as shown in Fig. 8, the size of the case 61 of the PS conversion unit 15 shown in Fig. 7 can be reduced, and since the sheet-type polarized light separating mirror 63 is very lower in cost than the prism type polarized light separating element, the total cost can be reduced.

The S wave obtained as shown in Fig. 8 passes through the first and second fly eye lenses 21 and 23 to be equalized and reaches the dichroic mirror 25 shown in Fig. 5. Then, part of the light rays (S wave) are introduced to the dichroic mirror 27 and the remaining one are introduced to the common mirror 37.

The light rays reflected from the mirror 37 pass through the condenser lens 51 and reaches the liquid crystal display 53 for red (R). An image displayed on the liquid crystal display 53, which is projected by the light rays from the mirror 37, is reflected from a semi-transparent film 41a of the dichroic cube 41 and is introduced to the projection lens group 17.

Part of the light rays reaching the dichroic mirror 27 is fed to the relay lens 29 and the rest reach the liquid crystal display 49 for green (G) through the condenser lens 47. An image displayed on the liquid crystal display 49 is projected by the light rays, passing through the semi-transparent film 41a of the dichroic cube 41, and is introduced to the projection lens group 17.

The light rays, which have passed through the relay lens 29, are reflected from the mirror 31, passing through the relay lens 33, and are reflected again from the mirror 35 along the optical axis OP3. The light rays are thus bent substantially 180° from the optical axis OP to the optical axis OP3, and are introduced to the liquid crystal display 45 for blue (B) through the condenser lens 43. An image displayed on the liquid crystal display 45 is projected by the light rays, being reflected from a semi-transparent film 41b of the dichroic cube 41, and is introduced to the projection lens group 17.

The images of R, G and B are then superimposed to each other through the projection lens group 17, to form light rays 5 to be projected. The light rays 5 are reflected from the mirror 103 shown in Fig. 2, and are projected on the backface 104 of the screen 102. The projected color image can be viewed from the front side of the screen 102 by the user U.

Other embodiments of the present invention will be described below.

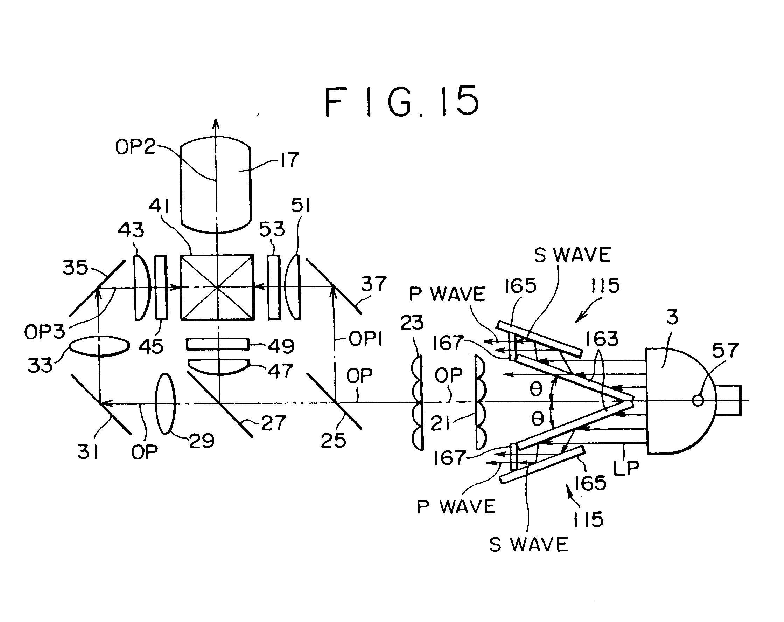

Fig. 15 shows another embodiment of the projection display of the present invention. A projection display 101 is different only in structure of a PS conversion unit 115 from the projection display 1 shown in Fig. 8, and therefore, the description of the basic configuration is omitted.

The PS conversion unit 115 of the projection display 101 shown in Fig. 15 has two sheet-type polarized light separating mirrors 163, two quarter-wave mirrors 165 and two half-wave plates 167. Like the embodiment shown in Fig. 8, the polarized light separating mirrors 163 are symmetrically disposed with respect to the optical axis OP such that the plane of each mirror is tilted at an angle θ with respect to the optical axis OP, and the quarter-wave plate mirrors 165 are disposed substantially in parallel to the polarized light separating mirrors 163. On the other hand, differently from the embodiment shown in Fig. 8, each half-wave plate 167 is mounted between the polarized light separating mirror 163 and the quarter-wave plate mirror 165.

When the substantially parallel light rays LP generated by the light source 3 enter the polarized light separating mirrors 163, the p wave passes through the polarized light separating mirrors 163, but the S wave is reflected therefrom and reaches the quarter-wave plate mirrors 165. The S wave is reflected from the quarter-wave plate mirrors 165, and is then converted into the P wave by the half-wave plates 167. That is to say, the PS conversion unit 115 can derive only the P wave from the parallel light rays LP by polarization-converting the S wave. Even in the case of using the P wave, like the embodiment shown in Fig. 8, the heat quality applied to the polarized light separating mirrors 163 of the PS conversion unit 115 can be reduced to about half, to suppress temperatures of the optical elements at low values and to increase the optical efficiency of the polarized light component used.

In this case, from the reason described in the embodiment shown in Fig. 8, the angle θ is preferably set in a range of 10 to 30°, more preferably at 20°. In addition, the polarized light separating mirrors 163 are arranged in the direction (normal to the paper plane of Fig. 15) perpendicular to the optical axis OP2 of the projection lens group 17.

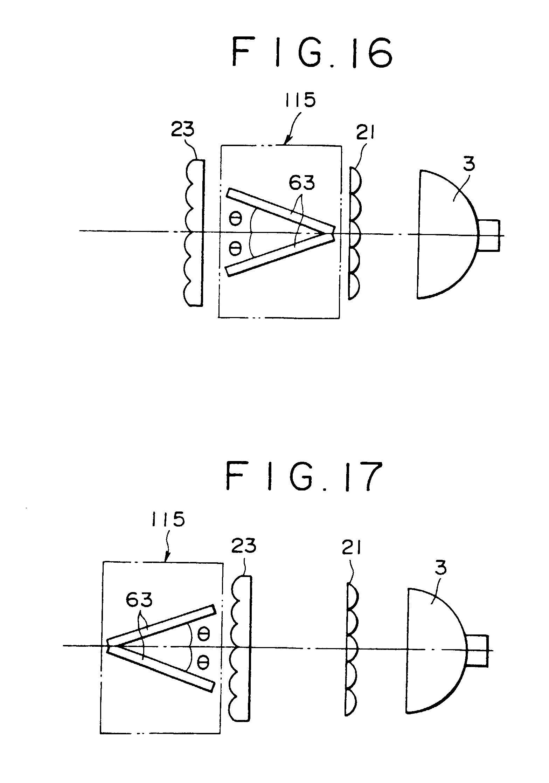

Fig. 16 shows a further embodiment in which the PS conversion unit 115 is positioned between the first and second fly eye lenses 21 and 23. Fig. 17 shows still a further embodiment in which the PS conversion unit 115 is positioned behind the second fly eye lens 23.

The arrangement examples shown in Figs. 16 and 17 can be applied to the PS conversion unit 15 shown in Fig. 8.

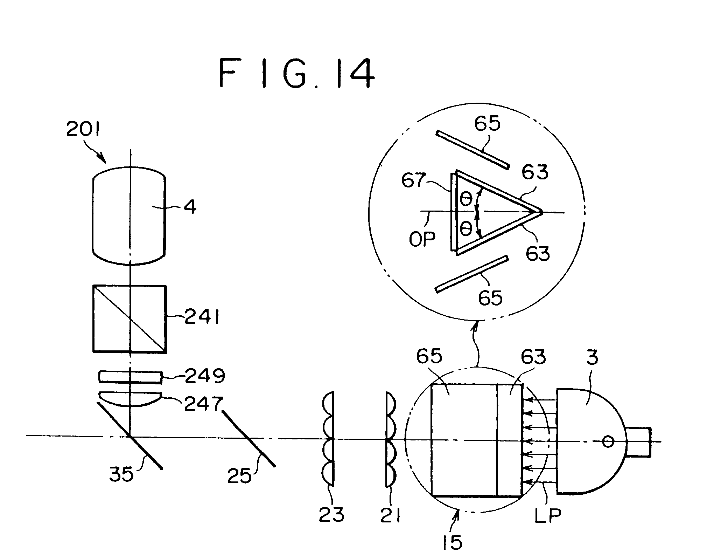

Fig. 14 shows a projection display 201 as an additional embodiment in which a liquid crystal display 249 is arranged between a dichroic cube 241 and a condenser lens 247. The liquid crystal display 249 is an image display element for simultaneously projecting images of three-primary colors (R, G, B).

With this arrangement, the number of the components of the optical system can be significantly reduced. Also the projection display 201 using one liquid crystal display 249 can be used for monochromatic display.

The present invention is not limited to the above embodiments.

While the kind of the liquid crystal display is not particularly limited in the above embodiments, the liquid crystal display may be represented, for example, by a liquid crystal display panel using a polycrystalline Si-TFT (thin film transistor). Also the TiO₂ film formed on the polarized light separating mirror 63 shown in Fig. 8 or the like may be replaced with other films made from, for example, ZrO₂, Ta₂O₅, and a material having a refractive index nd ≧ 2.0.

While the liquid crystal display is used as the image display element in the embodiments, the present invention can be applied to other display elements such as a reflection type liquid crystal display.

The light source is not limited to the type using a metal halide lamp. For example, other light sources such as a halogen lamp, mercury lamp and xenon lamp can be adopted.

The projection display of the present invention can be applied not only to the type in which an image is projected on the backface of the screen shown in Fig. 1 but also to the type in which an image is directly projected on the front face of the screen.

While a television set is used as the system to which the projection display is applied in the embodiments, the present invention can be applied to other monitors.

## Claims

1. A projection display (1) for projecting an image displayed on an image display element onto a screen using light rays generated by a light source (3),
characterised by comprising:
at least one sheet-type polarized light separating mirror (63) with its plane tilted at an angle of 10 to 30° with respect to an optical axis of said light source, said mirror being disposed between said image display element and said light source for separating a first polarized light component and a second polarized light component from each other, and converting either the first polarized light component or the second polarized light component, thereby unifying both the polarized light components into either the first polarized light component or the second polarized light component.

2. A projection display according to claim 1, wherein said sheet-type pclarized light separating mirror (63) is coated with a single TiO₂ film.

3. A projection display according to claim 1 or 2, wherein said light source (3) generates substantially parallel light rays, and said polarized light separating mirror (63) is disposed between said light source (3) and an optical integrator (21, 22).

4. A projection display according to any one of the preceding claims, wherein said sheet-type polarized light separating mirror is composed of a first sheet-type polarized light separating mirror (63) and a second sheet-type polarized light separating mirror, said first and second sheet-type polarized light separating mirrors being disposed symmetrically with respect to the optical axis of said light source.

5. A projection display according to any one of the preceding claims, wherein said image display element is a liquid crystal display (45, 49, 53).

6. A projection display according to any one of the preceding claims, wherein the image displayed on said image display element is reflected from a mirror (103) and is then projected onto a backface (104) of the screen (102).
